Europäisches Patentamt

European Patent Office

Office européen des brevets

(19)

(11) **EP 0 554 719 B1**

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.6: **C08G 18/08**, C08G 18/66

(21) Anmeldenummer: **93100875.9**

(22) Anmeldetag: **21.01.1993**

(54) **Verfahren zur kontinuierlichen Herstellung von Polyurethan und Polyurethanharnstoff-Elastomeren**

Process for the continuous production of polyurethane and polyurethane urea elastomers

Procédé pour la préparation en continu d'élastomères de polyuréthane et polyuréthane urée

(84) Benannte Vertragsstaaten:
**BE CH DE ES FR GB IT LI NL**

(30) Priorität: **03.02.1992 DE 4202973**

(43) Veröffentlichungstag der Anmeldung:
**11.08.1993 Patentblatt 1993/32**

(73) Patentinhaber: **BAYER AG**
**51368 Leverkusen (DE)**

(72) Erfinder:
- **Orthmann, Ernst, Dr.**
  **W-4047 Dormagen (DE)**
- **Wulff, Klaus, Dr.**
  **W-4150 Krefeld (DE)**
- **Hoeltzenbein, Peter, Dipl.-Ing.**
  **W-4047 Dormagen (DE)**
- **Judat, Helmut, Dr.**
  **W-4018 Langenfeld (DE)**
- **Wagner, Hans, Dr.**
  **W-4047 Dormagen (DE)**
- **Zaby, Gottfried, Dr.**
  **W-5090 Leverkusen (DE)**
- **Heidingsfeld, Herbert, Dipl.-Ing.**
  **W-5020 Frechen (DE)**

(56) Entgegenhaltungen:
**EP-A- 0 012 414**   **EP-A- 0 322 647**
**DE-A- 2 854 386**   **US-A- 4 334 783**

**Beschreibung**

Die Erfindung betrifft ein verbessertes Verfahren zur kontinuierlichen Herstellung von Polyurethan- und Polyurethanharnstoff-Elastomeren durch Umsetzung von Polyisocyanate mit Polyhydroxyverbindungen und/oder Polyaminverbindungen mit Molekulargewicht 400 bis 10.000 und Kettenverlängerungsmitteln in einem Molekulargewicht unter 400, sowie gegebenenfalls monofunktionellen Verbindungen und gegebenenfalls in Gegenwart von Aktivatoren, Stabilisatoren, Gleitmitteln und weiteren an sich bekannten Zuschlagstoffen.

Die nach dem neuen Verfahren hergestellten Produkte zeichnen sich durch verbesserte Reißfestigkeit, bessere Fließfähigkeit und vor allem bessere Extrusionsfähigkeit durch verringerte Gelkörperanteile aus, wobei alle anderen technologisch wichtigen Kennwerte wie Bruchdehnung, Elastizitätsmoduli, Elastizität auf gleich hohem Standard bleiben, wie bei bisher verwendeten Verfahren.

Thermoplastische Polyurethan- und Polyurethanharnstoff-Elastomeren auf der Grundlage von Polyisocyanate mit Polyhydroxyverbindungen und/oder Polyaminoverbindungen mit Molekulargewicht 400 bis 10.000 und Kettenverlängerungsmitteln mit einem Molekulargewicht unter 400, sowie gegebenenfalls monofunktionellen Verbindungen und gegebenenfalls in Gegenwart von Aktivatoren, Stabilisatoren, Gleitmittel und weiteren an sich bekannten Zuschlagstoffen werden im Kunststoff-Handbuch (Band VII) von Vieweg-Höchtlen, Carl-Hanser-Verlag, ausführlich beschrieben. Für die technische Herstellung derartiger Kunststoffe sind verschiedene Verfahren bekannt geworden, die z.B. in den DE-Offenlegungsschriften 1 106 959, 1 157 722, 1 165 852, 2 059 570, 2 302 564, 2 423 764, in 2 302 564, 2 447 368, 2 549 372, 2 823 762, 2 842 806, 3 224 324 aufgeführt sind, umgesetzt werden.

In einer Reihe von deutschen Offenlegungsschriften wie 2 842 806 oder 2 854 386 werden ein kontinuierliches Verfahren beschrieben, die oben genannten Komponenten in einer zweiwelligen Schneckenmaschine mit gleichsinnig rotierenden Schneckenwellen und selbstreinigender Schneckengeometrie bei Temperaturen zwischen 70 und 260°C herzustellen. Nachteilig hat sich erwiesen, daß die Komponenten bei diesen Temperaturen sehr dünnflüssig sind, die Mischwirkung durch die Rotation zweier gleichsinnig drehender Wellen nicht groß ist und die Verweilzeit für ein vollständiges Ausreagieren nicht ausreichend ist. Die entstehenden Produkte müssen zum vollständigen Ausreagieren in aufwendigen Apparaturen nachbehandelt werden und enthalten mehr oder weniger Gelkör per, die eine Verwendung zur Extrusion zu sehr dünnen Folien verhindern.

Trotz thermischer Nachbehandlung bleiben die entstehenden Elastomere in ihren Eigenschaften wie z.B. Fließfähigkeit, Entformbarkeit, Gelkörpergehalt oder Verzweigungsgrad nicht stabil, was die Liefersicherheit von Elastomer-Produkten zur sicheren einwandfreien Produktion von Extrudaten oder Herstellung von viskositätsstabilen Lösungen zu Beschichtungszwecken bei den Kunden stark vermindert.

In der deutschen Offenlegungsschrift 2 302 564 werden zur Herstellung von Polyurethan- und Polyurethanharnstoff-Elastomeren kleinvolumige, gerührte Mischkammern und Mischdüsen zur Mischung der Ausgangskomponenten genannt. Mischdüsen sind bekannte Organe zur Vermischung von Flüssigkeiten. Detaillierte Angaben über Geometrie der Mischdüse und wie Anordnung der Mengenströme werden nicht gemacht. In den Beispielen für das erfindungsgemäße Verfahren wird nur ein Mischkopf, aber keine Mischdüsen zur Herstellung der Polymeren verwendet. Ein Verfahren mit einer Mischdüse wird nicht beschrieben.

In der deutschen Offenlegungsschrift 2 823 762 wird ein kontinuierliches Verfahren beschrieben, bei dem die Ausgangskomponenten durch eine Mischzone, einem Statikvormischer, geleitet werden, in der eine Durchmischung stattfindet, wobei die Produkttemperatur so niedrig ist, daß eine Reaktion weitgehend vermieden wird, um ein Ansetzen der Produkte zu vermeiden.

Mit diesem Verfahren wird zwar eine gute Vermischung erreicht, aber durch Unterdrückung der Reaktion mit tiefen Temperaturen eine Entmischung in der Reaktionszone nicht verhindert. Die anreagierte Mischung besitzt im Folgeschritt nicht ausreichend Reaktionszeit, um vollständig und gleichmäßig auszureagieren.

Es bestand somit die Aufgabe, das bestehende Verfahren zur kontinuierlichen Herstellung von Polyurethan- und Polyurethanharnstoff-Polymere durch Umsetzung von Polyisocyanate mit Polyhydroxyverbindungen und/oder Polyaminverbindungen mit Molekulargewicht 400 bis 10.000 und Kettenverlängerungsmitteln mit einem Molekulargewicht unter 400, sowie gegebenenfalls monofunktionellen Verbindungen und gegebenenfalls in Gegenwart von Aktivatoren, Stabilisatoren, Gleitmittel und weiteren an sich bekannten Zuschlagstoffen in einer zweiwelligen Schneckenmaschine mit gleichsinnig rotierenden Schneckenwellen und selbstreinigender Schneckengeometrie bei Temperaturen zwischen 70 und 260°C so zu bessern, daß

- die Vermischung der Komponenten mit feinster Verteilung erfolgt,

- bei der Vermischung keine Dichtungsprobleme durch sich drehende Teile zur Außenumgebung auftreten sollten,

- bei der Vermischung keine Anbackungen von Produkt in den Mischaggregaten auftreten sollten,

- und zu keinen Produktanbackungen oder Verstopfungen im System führt,

- reinigungsfreundlich ist,

- das Endprodukt nach Verlassen des Zweiwellenextruders weiter ausreagiert ist,

- die Veränderungen der Produkteigenschaften, wie Nachwachsraten der Viskosität, nach der Produktion klein sind,
- bessere Extrusionsaualitäten erzielt werden.

Diese Aufgabe wurde erfindungsgemäß dadurch gelöst, daß man zur Herstellung des Polymeren die Mischung aus Polyisocyanate, Polyhydroxyverbindungen oder Polyaminverbindungen mit den Kettenverlängerungsmitteln in einer speziellen Düse der nachstehend näher beschriebenen Art zusammengeführt, bevor die Reaktionsmischung in den Zweiwellenextruder eingetragen wird.

Gegenstand der Erfindung ist ein Verfahren zur kontinuierlichen Herstellung von Polyurethan- und Polyurethanharnstoff-Elastomere durch Umsetzung

- von Polyisocyanate
- mit Polyhydroxyverbindungen und/oder Polyaminverbindungen mit Molekulargewicht 400 bis 10.000
- mindestens zwei Zerewitinow-aktive Wasserstoffatome aufweisenden Kettenverlängerungsmitteln mit einem Molekulargewicht unter 400,
- gegebenenfalls in Gegenwart von monofunktionellen Verbindungen wie Monoisocyanate, Monoalkohole oder Monoamine
- und Aktivatoren, Stabilisatoren, Gleitmittel und weiteren an sich bekannten Zuschlagstoffen,

dadurch gekennzeichnet, daß man zur Herstellung die Ausgangsstoffe oder Ausgangsgemische, nämlich eine isocyanat- und eine hydroxyl- und/oder aminhaltige Komponent, in einer Düse (1) zusammenführt, indem die eine der beiden Komponenten in dieser Düse (1) eingeschnürt wird und die andere Komponente in dieser Einschnürung (3) dem Strom der ersten Komponente in mehreren Teilströmen durch eine entsprechende Anzahl von über den Umfang der Einschnürung (3) verteilten Bohrungen (5) von einer Seite her zugeführt und das entstehende Produkt in einen Zweiwellenextruder eindosiert.

Es hat sich überraschenderweise gezeigt, daß bei diesem Verfahren mit niedrigen Druckverlusten gearbeitet werden kann und bei geringen Verweilzeiten durch die extrem gute Mischwirkung der Düse ein hoher Umsetzungsgrad erzielbar wird, so daß in den Zweiwellenextruder eine hochviskose Schmelze eindosiert wird.

Die verwendete Düse wird auch als Ringlochdüse bezeichnet. Die Einschnürung des Hauptstroms kann sprunghaft oder stetig erfolgen. Da in der Ringlochdüse zur Erzielung optimaler Vermischung in der Regel nur ein Druckverlust von etwa 3 bar erforderlich ist, können die Vordrücke der Komponentenströme in der Regel klein gehalten werden. Dadurch können die bisher üblichen Pumpen eingesetzt werden und das bestehende Rohrleitungssystem beibehalten werden. Es können jedoch auch höhere Druckverluste zur Anwendung gelangen, wenn der Nachteil des höheren Vordruckes in Kauf genommen wird.

Erfindungsgemäß zu verwendete Polyisocyanate A) sind die an sich bekannten aliphatischen, cycloaliphatischen, araliphatischen, aromatischen und heterocyclischen Diisocyanate des Standes der Technik. Erfindungsgemäß bevorzugte Diisocyanate sind aromatische Diisocyanate, Naphthylen-1,5-diisocyanat, 3,3'-Dimethyl-4,4'-diisocyanatodiphenyl (TODI), 1,4-Diisocyanatobenzol und das entsprechend hydrierte Produkt, Toluylendiisocyanate und insbesondere die Diphenylmethandiisocyanat-Isomeren. Besonders bevorzugt ist das 4,4'-Diisocyanatodiphenylmethan oder sein Isomerengemisch mit bis zu 5 Mol-%, vorzugsweise 1 bis 4 Mol-%, des 2,4'-Diisocyanatodiphenylmethans, zumeist begleitet von sehr geringen Mengen des 2,2'-Diisocyanato-diphenylmethan-Isomeren.

Die genannten Diisocyanate können gegebenenfalls zusammen bis etwa 15 Mol-% (bezogen auf Diisocyanat) eines höherfunktionellen Polyisocyanates eingesetzt werden: die Menge des höherfunktionellen Polyisocyanats muß jedoch so begrenzt werden, daß ein noch schmelzbares beziehungsweise thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl- beziehungsweise Aminoverbindungen E) beziehungsweise auch von Monoisocyanaten E) ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine wie Butyl- oder Dibutylamin, Hydroxylamin, Stearylamin, N-Methylstearylamin, sowie Monoalkohole wie Butanol-1, 2-Ethylhexanol-1, Dodecanol-1, Isobutanol oder tert.-Butanol, Cyclohexanol oder Ethylenglykolmonomethylether und Stearylalkohol erwähnt.

Bevorzugte Kettenverlängerungsmittel D) mit Molekulargewicht sind z.B. die in DE-A 2 302 564, 2 423 764, 2 549 372, 2 402 840, 2 457 387 und 2 854 384 beschriebenen Verbindungen. Es sind dies insbesondere niedermolekulare Polyalkohole, vorzugsweise Diole, Diamine, insbesondere aliphatische Diamine, Hydrazine und Hydraziderivate. Als Diamine seien Diethyl-toluylendiamine oder Isophorondiamin genannt. Auch Aminoalkohole wie Diethanolamin, n-Methyldiethanolamin, kommen erfindungsgemäß in Frage. Bevorzugte Kettenverlängerungsmittel sind Diole wie z.B. Di- und Triethylenglykol, Hexandiol1,6 und Hydrochinon-di-β-hydroxyethylether, sowie besonders bevorzugt das Butandiol-1,4, gegebenenfalls in Gemischen mit anderen Diolen. Das Molekulargewicht der Kettenverlängerer liegt bei ≥18 bis 399, bevorzugt bei ≥76 bis 399.

Ferner können in dem Fachmann bekannter Form monofunktionelle Verbindungen E) in untergeordneten Anteilen, z.B. von 0,01 bis 4 Gew.-%, bezogen auf PU-Feststoff, als sogenannte Kettenabbrecher mitverwendet werden. Beispiele sind Monoalkohole wie Butanol, 2-Ethylenhexanol, Isobutylalkohol, Octanol-1, Stearylalkohol oder Monoamine wie Anilin, Dibutylamin, N-Methylstearylamin oder Piperidin.

Bevorzugte Hydroxylgruppen-haltige höhermolekulare Verbindungen B) sind Polyester-, Polyestercarbonat- und Polyetherdiole, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten.

Ferner sind geeignet Hydroxylpolycarbonate, Hydroxypolycaprolactone. In einer besonders bevorzugten Ausführungsform wird Butandiol-1,4-adipat vom Molekulargewicht 1500 bis 5000 verwendet.

Bevorzugt werden ferner Hydroxyetherdiole auf Basis Ethylenoxid, Propylenoxid oder Mischpolyether aus Propylenoxid und/oder Ethylenoxid und/oder Tetrahydrofuran, so z.B. Hydroxyetherdiole auf Basis Tetrahydrofuran mit einem Molekulargewicht von 1000 bis 3000. Geeignete Polyole werden z.B. in den deutschen Offenlegungsschriften 2 302 564, 2 423 764, 2 549 372 (US-PS 3 963 679), DE-OS 2 402 840 (US-PS 3 984 607), DE-AS 2 457 387 (US-PS 4 035 213) und in der DE-OS 2 854 384, 2 920 501 und 3 405 531 eingehend beschrieben.

Gegebenenfalls können auch höhermolekulare Polyaminverbindungen C), vorzugsweise mit primären aromatischen Aminogruppen eingesetzt werden. Bevorzugte Vertreter werden beispielsweise durch Hydrolyse von entsprechenden NCO-Prepolymeren auf Basis von höhermolekularen Polyhydroxyverbindungen und überschüssigen aromatischen Diisocyanaten durch (vorzugsweise basische) Hydrolyse hergestellt. Beispiele für diese Verfahren werden in DE-A 2 948 419, DE-A 3 039 600, DE-A 3 112 118, EP-A 61 627, EP-A 71 132 und EP-A 97 869 angegeben. In der erstgenannten Patentschrift werden auch weitere Verfahren des Standes der Technik zur Herstelluna von aromatischen Aminoverbindungen höhermolekularer Struktur, sogenannter Aminopolyether, genannt, wie sie für das erfindunasgemäße Verfahren geeignet sind. Weitere Herstellungsverfahren werden in der DE-AS 1 694 152, FR-PS 1 415 317 oder DE-AS 1 155 907 beschrieben.

Vor und/oder bei und/oder nach der Polyurethan-Reaktion können selbstverständlich die üblichen Hilfsstoffe F wie Katalysatoren, Trennmittel, Antistatika, Flammschutzmittel und Einfärbemittel nach dem Stand der Technik (siehe z.B. DE-A 2 854 409. DE-OS 2 920 501 und DE-PS 3 329 775) zugegeben werden. Auch Antioxidantien und UV-Absorber (Lichtschutzmittel) sind nach dem Stand der Technik möglich (siehe DE-A 3 405 531).

Als Katalysatoren können so z.B. tertiäre Amine, organische Metallverbindungen, insbesondere organische Zinn-, Blei- und Titanverbindungen eingesetzt werden, z.B. Zinn-II-acetat, Zinn-II-ethylhexoat, Dibutylzinndilaurat oder Bleiacetat.

Als Trennmittel werden vorzugsweise Wachse oder Öle verwendet, ferner z.B. langkettige Verbindungen mit Carboxyl-, Ester-, Amid-, Urethan- oder Harnstoffgruppen sowie auch Silicone, wie sie als Trennmittel beispielsweise in der DE-OS 2 204 470 aufgeführt sind.

Die Mengen an Reaktionskomponenten A) bis E) für die Polyurethane werden im erfindungsgemäßen Verfahren in der Regel so gewählt, daß das NCO/OH-Äquivalentverhältnis von Isocyanat zu OH-Verbindungen zwischen 0,9 und 1,15, bevorzugt 0,95 und 1,03 liegt.

Die genannten Komponenten können entweder in Reinform, als miteinander vermischt oder als teilweise miteinander abreagierte Mischungen in der Ringlochdüse homogenisiert und anschließend zur Reaktion gebracht werden.

Vorzugsweise wird der größere Volumenstrom durch die Einschnürung (3) geführt, wobei im Falle der Verwendung von annähernd gleichen Volumenströmen jede der beiden Komponenten den Mittel- beziehungsweise Seitenstrom bilden kann. Die Beachtung dieser Maßnahmen dient einer optimalen Vermischung und damit einwandfreien Reaktionsablauf.

Gemäß einer besonderen Verfahrensweise wird in der Einschnürung eine Strömungsgeschwindigkeit von 1 bis 10 m/sec eingehalten. Es können jedoch auch höhere Strömungsgeschwindigkeiten in der Einschnürung beispielsweise bis zu 50 m/sec eingehalten werden, wenn der Nachteil des hierzu erforderlichen hohen Pumpenvordrucks in Kauf genommen wird. Umgekehrt kann selbstverständlich bei der bevorzugten Strömungsgeschwindigkeit von 1 bis 10 m/sec der Vordruck in vorteilhafter Weise gering gehalten werden.

Vorzugsweise weist die Einschnürung über ihre gesamte Länge L einen konstanten Durchmesser D auf.

Vorzugsweise wird als Länge L mindestens der zweifache Durchmesser D der Einschnürung gewählt.

Diese Ausgestaltung dient einer besonders intensiven Vermischung und die Strömung stabilisiert sich in ausreichender Weise.

Besonders vorteilhaft ist es, für die Länge $L_1$ der Einschnürung des axial zugeführten Stromes bis zur Zusammenführung mit den Teilströmen der zweiten Komponente das 0,5- bis 2-fache des Durchmessers D der Einschnürung zu wählen.

Gemäß einer weiteren besonderen Ausgestaltung des neuen Verfahrens wird der aus beiden Strömen resultierende Produktstrom einer konstant bleibenden Einschnürung unterworfen: deren Länge $L_2$ mindestens jener Strecke entspricht, in welcher die Reaktion des freien Isocyanats weitgehend abgeschlossen ist. Die Länge $L_2$ beträgt im allgemeinen maximal das 2-fache des Durchmessers D. Größere Abmessungen $L_2$ führen zu höheren Druckverlusten, ohne daß damit irgendein Vorteil verbunden wäre.

Die genannten Maßnahmen stellen sicher, daß sich keine Anbackungen in der Düse bilden.

Eine besonders hohe Ausbeute läßt sich erzielen, indem ein Leistungsverhältnis des axial zugeführten Stromes $\varepsilon_A$ zum seitlich zugeführten Strom $\varepsilon_S$

$$\frac{\varepsilon_A}{\varepsilon_S} = \frac{\delta_A \cdot \overset{\circ}{V}_A \cdot V_A^2}{\delta_S \cdot \overset{\circ}{V}_S \cdot V_S^2} = 0,01 \text{ bis } 1,0,$$

vorzugsweise von 0,02 bis 0,5 und besonders bevorzugt von 0,03 bis 0,25 eingehalten wird, wobei

$\delta$    die Dichte,

$\overset{\circ}{V}$    den Volumenstrom,

$V$    die Strömungsgeschwindigkeit,
und zwar jeweils mit dem Index A des axial zugeführten Stromes und jeweils mit dem Index S des seitlich zugeführten Stromes

bedeuten.

Die hiermit erzielbare hohe Ausbeute gewährleistet gleichzeitig einen niedrigen Energieeinsatz.

Gemäß einer weiteren besonderen Durchführungsform wird hinter der Einschnürung der Strömungsquerschnitt stetig erweitert.

Dadurch wird erreicht, daß keine Verwirbelung und Rückströmung stattfinden können. Es versteht sich, daß die Erweiterung bei einem Maximum endet, welches dem Durchmesser einer anschließenden Rohrleitung entspricht. Die Vermeidung einer Rückströmung bietet eine besondere Gewähr für die Vermeidung von Anbakkungen und Verstopfungen.

Die Anzahl i der Bohrungen für die seitlich zuzuführenden Teilströme wird gemäß einer weiteren Verfahrensvariante zwischen $2 \leq i \leq m$, vorzugsweise zwischen $4 \leq i \leq m$, gewählt, wobei sich m aus der Bedingung

$$\frac{\pi \cdot D}{m \cdot d} = > 1.1. \text{ vorzugsweise } > 1.5. \text{ insbesondere}$$

$\geq 2$ ergibt, wobei D den Durchmesser der Einschnürung und d den Durchmesser der Bohrungen bedeuten.

Diese Maßnahme wirkt sich ebenfalls günstig auf die Vermischung und damit auf die Reaktion sowie auf die Vermeidung von Anbackungen aus.

Vorzugsweise werden alle Bohrungen in einer gemeinsamen Ebene senkrecht zur Einschnürung angeordnet, obwohl auch Abweichungen hiervon möglich sind.

Dadurch wird erreicht, daß die Reaktion nur in dieser Ebene starten kann, also bereits reagierendes Produkt nicht mehr erneut mit der zweiten Komoonente beaufschlagt wird. Auch hierdurch wird die Gefahr von Anbackungen herabgesetzt.

Im bevorzugten Verfahren wird eine Prepolymer/Polyisocyanatmischung mit einer Kettenverlängerungsmittel enthaltende Komponente in der Düse vermischt.

Da die Prepolymer/Polyisocyanatmischung im allgemeinen den größeren Volumenstrom darstellt, wird sie, den oben gemachten Ausführungen entsprechend, im allgemeinen durch die Einschnürung geleitet.

Die Zeichnungen dienen zur näheren Erläuterung des erfindungswesentlichen Mischaggregats.

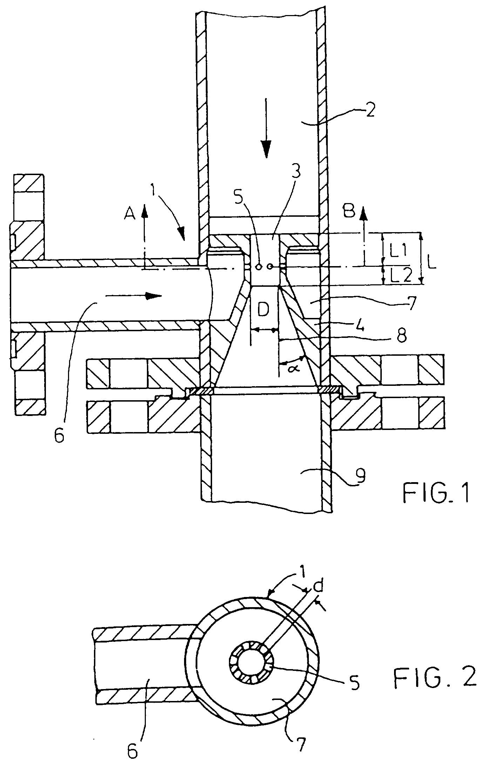

Fig. 1 zeigt die Düse im Längsschnit und

Fig. 2 einen Schnitt gemäß Linie A-B in Fig. 1.

Im einzelnen bedeuten:

(1) die erfindungsgemäß zu verwendende Düse;

(2) das Zuleitungsrohr für den Hauptstrom;

(3) die sprunghafte Einschnürung des Hauptstromes;

(4) den die Einschnürung verursachenden Einsatz mit eingebauten Seitenbohrungen;

(5) die Seitenbohrungen;

(6) die Zuleitung des Seitenstromes;

(7) die die Einschnürung (3) umgebende Kammer, aus welcher die Bohrungen (5) abführen;

(8) die stetige Erweiterung am Ausgang der Düse;

(9) das Abführrohr;

D    den Innendurchmesser der Einschnürung;

d    den Durchmesser der Seitenbohrungen;

L    die Gesamtlänge der Einschnürung;

$L_1$    den Abstand vom Beginn der Einschnürung bis zur Ebene der Seitenbohrungen und

$L_2$    den Abstand von der Ebene der Seitenbohrungen bis zum Beginn der stetigen Erweiterung.

Zur Herstellung der Reaktionsmischungen unter Verwendung des erfindungswesentlichen Mischaggregats kann beispielsweise wie folgt vorgegangen werden:

Einer Düse 1 wird über ein Zuleitungsrohr 2, welches sprunghaft in eine in der Düse 1 angeordnete Einschnürung 3 übergeht, der Hauptstrom zugeführt. Die Einschnürung 3 ist in einem Einsatz 4 angeordnet. Die Einschnürung 3 weist über ihre gesamte Länge L den konstanten Durchmesser D auf im Abstand $L_1$, welcher z.B. dem 1,5-fachen Durchmesser D der Einschnürung 3 entspricht, sind z.B. sechs Bohrungen 5 über dem Umfang regelmäßig verteilt angeordnet. Einander gegenüberliegende Bohrungen (5) sind um den Durchmesser d gegeneinander versetzt, so daß die eingespritzten Teilströme aneinander vorbeizielen. Die zweite Komponente wird über ein Zuleitungsrohr (6) einer die Einschnürung (3) umgebenden Kammer (7), aus welcher die Bohrungen (5) abführen, zugeführt. Die Länge $L_2$ der Einschnürung (3) hinter den Bohrungen (5) entspricht z.B. dem Durchmesser D der Einschnürung (3) und damit in etwa demjenigen Bereich, in welchem die Reaktion des freien Isocyanates weitgehend abgeschlossen ist. Hinter der Einschnürung (3) weist die Düse (1) eine stetige Erweiterung (8) auf, deren Winkel α mit der Achse z.B. 20° beträgt. An diese Erweiterung (8) schließt sich ein Abführrohr (9) gleichen Durchmessers wie das Zuleitungsrohr (2) an.

Die unter Verwendung des erfindungsgemäßen Mischaggregats heraestellten Reaktionsgemische werden in einen Zweiwellenextruder eindosiert, wie er in Firmenschriften der Fa. Werner & Pfleiderer, Stuttgart, oder in den obengenannten Patenten und Übersichtsartikeln näher beschrieben wird.

Die nach dem erfindungsgemäßen Verfahren hergestellten Produkte weisen verbesserte Reißfestigkeiten, bessere Fließfähigkeit und vor allem bessere Extrusionsfähigkeit durch verringerte Gelkörperanteile aus, wobei alle anderen technologisch wichtigen Kennwerte wie Bruchdehnung, Elastizitätsmodul, Elastizität auf gleich hohem Standard bleiben, als gegenüber dem bisher verwendeten Verfahren.

Der Gegenstand der Erfindung soll anhand des folgenden Beispiels erläutert werden.

In den folgenden Beispielen wurde eine zweiwellige, selbstreinigende Schneckenmaschine des Typs ZSK 83 der Firma Werner & Pfleiderer verwendet.

Beispiel 1 (Vergleich)

100 Gew.-Teile eines Polyesters aus Adipinsäure und Butandiol-1,4 (OH-Zahl 50, Säurezahl = 0,7), welcher mit 10 ppm Titantetrabutylat aktiviert wurde, 10 Teile Butandiol-1,4 sowie 40 Gew.-Teile flüssiges 4,4'-Diisocyanatdiphenylmethan wurden kontinuierlich in konstantem Mengenverhältnis gleichzeitig in die vorderste Einspeisestelle (Gehäuse 1) der zweiwelligen Schneckenmaschine eingespeist und gemäß Beispiel von DE-OS 23 02 564 umgesetzt.

Es wurde ein homogenes, klar-transparentes Polyurethan mit einer Zugfestigkeit (DIN 53 504) von 45 MPa bei 540% Bruchdehnung (DIN 53 504) und Rückprallelastizität von 43% und Elastizitätmodul bei 100% Dehnung von 5,4 MPa und Shore-Härte-A von 86 und Schmelzviskosität (Melt-Volume-Index) von 17 g/10 min (10 kp) erhalten.

Beispiel 2 (erfindungsgemäßes Verfahren)

100 Gew.-Teile eines Polyesters aus Adipinsäure und Butandiol-1,4 (OH-Zahl 50, Säurezahl = 0,7), welcher mit 10 ppm Titantetrabutylat aktiviert, wurden mit 40 Gew.-Teile flüssiges 4,4'-Diisocyanatdiphenylmethan kontinuierlich in konstantem Mengenverhältnis zu einem Prepolymer umgesetzt, und darauf dieses Prepolymer in der speziellen beschriebenen Düse (L=10mm, $L_1$=6mm, $L_2$=4mm, d=0,4mm, D=4mm, i=4) mit 10 Teilen Butandiol-1,4 kontinuierlich in konstantem Mengenverhältnis vermischt und zur Reaktion gebracht, indem das Prepolymer durch die Einschnürung geleitet und das Butandiol seitlich durch die Bohrungen zugeführt wird. Das entstandene Reaktionsprodukt wurde in die vorderste Einspeisestelle (Gehäuse 1) der zweiwelligen Schneckenmaschine eingespeist und umgesetzt.

Es wurde ein homogenes, klar-transparentes Polyurethan mit einer Zugfestigkeit (DIN 53 504) von 54 MPa bei 560% Bruchdehnung (DIN 53 504) und Rückprallelastizität von 43% und Elastizitätsmodul bei 100% Dehnung von 5,6 MPa und Shore-Härte-A von 86 und Schmelzviskosität (Melt-Volume-Index) von 21 g/10 min (10 kp) erhalten.

Der Gelkörpergehalt is deutlich geringer als bei den Produkten nach dem Verfahren nach Beispiel 1.

**Patentansprüche**

1. Verfahren zur kontinuierlichen Herstellung von Polyurethan- und Polyurethanharnstoff-Elastomeren durch Umsetzung von

A) Polyisocyanaten mit

B) Polyhydroxylverbindungen vom Molekulargewicht 400 bis 10.000 und/oder

c) Polyaminoverbindungen vom Molekulargewicht 400 bis 10.000

D) mindestens zwei Zerewitinow-aktive Wasserstoffatome aufweisenden Kettenverlängerungsmitteln mit einem Molekulargewicht unter 400, sowie gegebenenfalls

E) Monoisocyanaten und/oder gegenüber Isocyanaten monofunktionellen Verbindungen, gegebenenfalls in Gegenwart von

F) Aktivatoren, Stabilisatoren, Gleitmittel und weiteren an sich bekannten Zuschlagstoffen,

dadurch gekennzeichnet, daß man zur Herstellung die Ausgangsstoffe oder Ausgangsgemische, nämlich eine isocyanathaltige und eine hydroxyl- und/oder aminhaltige Komponente, in einer Düse (1) zusammenführt, indem die eine der beiden Komponenten in dieser Düse (1) eingeschnürt wird und die andere Komponente in dieser Einschnürung (3) dem Strom der ersten Komponente in mehreren Teilströmen durch eine entsprechende Anzahl von über den Umfang der Einschnürung (3) verteilten Bohrungen (5) von einer Seite her zugeführt wird und das entstehende Produkt in einer Verweilzeitstrecke (9) umgesetzt wird.

2. Verfahren nach Anspruch 1, dadurch gekennzeichnet, daß der größere Volumenstrom durch die Einschnürung (3) geführt wird.

3. Verfahren nach Anspruch 1 oder 2, dadurch gekennzeichnet, daß in der Einschnürung eine Strömungsgeschwindigkeit von 1 bis 10 m/sec eingehalten wird.

4. Verfahren nach einem der Ansprüche 1 bis 3, dadurch gekennzeichnet, daß die Einschnürung (3) über ihre gesamte Länge L einen konstanten Durchmesser D aufweist.

5. Verfahren nach Anspruch 4, dadurch gekennzeichnet, daß die Länge L mindestens dem 2-fachen Durchmesser D der Einschnürung (3) entspricht.

6. Verfahren nach einem der Ansprüche 1 bis 5. dadurch gekennzeichnet, daß für die Länge $L_1$ der Einschnürung (3) des axial zugeführten Stromes bis zur Zusammenführung mit den Teilströmen der zweiten Komponente das 0,5- bis 2-fache des Durchmessers D der Einschnürung (3) gewählt wird.

7. Verfahren nach einem der Ansprüche 1 bis 6, dadurch gekennzeichnet, daß der aus den beiden Strömen resultierende Produktstrom einer konstant bleibenden Einschnürung (3) unterworfen wird, deren Länge $L_2$ mindestens jener Strecke entspricht, in welcher die Reaktion des freien Isocyanates weitgehend abgeschlossen ist.

8. Verfahren nach einem der Ansprüche 1 bis 7, dadurch gekennzeichnet, daß das Leistungsverhältnis des axial zugeführten Stromes $\varepsilon_A$ zum seitlich zugeführten Strom $\varepsilon_S$

$$\frac{\varepsilon_A}{\varepsilon_S} = \frac{\delta_A \cdot V_A \cdot V_A^{\,2}}{\delta_S \cdot V_S \cdot V_S^{\,2}} = 0.01 \text{ bis } 1.0.$$

eingehalten wird, wobei

$\delta$    die Dichte,

$V$    den Volumenstrom,

$V$    die Strömungsgeschwindigkeit,
und zwar jeweils mit dem Index A des axial zugeführten Stromes und jeweils mit dem Index S des seitlich zugeführten Stromes

bedeuten.

9. Verfahren nach einem der Ansprüche 1 bis 8, dadurch gekennzeichnet, daß hinter der Einschnürung (3) der Strömungsquerschnitt stetig erweitert wird.

10. Verfahren nach einem der Ansprüche 1 bis 9, dadurch gekennzeichnet, daß die Anzahl i der Bohrungen (5) für die seitlich zuzuführenden Teilströme zwischen $2 \leq i \leq m$ gewählt wird, wobei sich m aus der Bedingung

$$\frac{\pi \cdot D}{m \cdot d} = > 1.1 \text{ ergibt}$$

wobei D den Durchmesser der Einschnürung (3) und d den Durchmesser der Bohrungen (5) bedeuten.

11. Verfahren nach einem der Ansprüche 1 bis 10, dadurch gekennzeichnet, daß bevorzugt das Gemisch der Komponente A mit B und/oder C gegebenenfalls in Gegenwart von Komponenten E undoder F durch die Einschnürung geführt und der Volumenstrom der Komponente D gegebenenfalls in Gegenwart von Komponenten E und/oder F durch die seitliche Bohrungen geführt wird.

12. Verfahren nach einem der Ansprüche 1 bis 11, dadurch gekennzeichnet, daß bevorzugt das Gemisch der Komponente A mit B und/oder C mit min. 100°C der Düse zugeführt wird.

**Claims**

1. Process for the continuous production of polyurethane and polyurethaneurea elastomers by the reaction of

A) polyisocyanates with

B) polyhydroxyl compounds of a molecular weight from 400 to 10,000 and/or

C) polyamino compounds of a molecular weight from 400 to 10,000

D) chain extenders having at least two Zerewitinoff active hydrogen atoms with a molecular weight of below 400, optionally together with

E) monoisocyanates and/or compounds monofunctional towards isocyanates, optionally in the presence of

F) activators, stabilisers, lubricants and further *per se* known additives,

characterised in that the starting materials or starting mixtures, namely an isocyanate-containing component and a hydroxyl- and/or amine-containing component are brought together in a nozzle (1) by constricting one of these two components in this nozzle (1) and introducing the other component into the stream of the first component in this constriction (3) from one side in the form of two or more partial streams through a corresponding number of orifices (5) distributed around the periphery of the constriction (3) and reacting the resultant product in a dwell zone (9).

2. Process according to claim 1, characterised in that the larger volumetric flow is passed through the constriction (3).

3. Process according to claim 1 or 2, characterised in that a flow velocity of 1 to 10 m/sec is maintained in the constriction.

4. Process according to one of claims 1 to 3, characterised in that the constriction (3) has a constant diameter D over its entire length L.

5. Process according to claim 4, characterised in that length L corresponds to at least twice the diameter D of the constriction (3).

6. Process according to one of claims 1 to 5, characterised in that the selected length $L_1$ of the constriction (3) of the axially introduced stream to the point where it is brought together with the partial streams of the second component is 0.5 to 2 times the diameter D of the constriction (3).

7. Process according to one of claims 1 to 6, characterised in that the product stream arising from the two streams is subjected to a constant constriction (3) over a length $L_2$ at least corresponding to that section in which the reaction of the free isocyanate is largely complete.

8. Process according to one of claims 1 to 7, characterised in that the quantity ratio of the axially introduced stream $\varepsilon_A$ to the laterally introduced stream $\varepsilon_S$

$$\frac{\varepsilon_A}{\varepsilon_S} = \frac{\delta_A \cdot V_A \cdot V_A^2}{\delta_S \cdot V_S \cdot V_S^2}$$

is maintained at 0.01 to 1.0,
wherein

$\delta$   means density

V   means the volumetric flow,

V   means the flow velocity,
with A being in each case the index for the axially introduced stream **and S** being in each case the index for the laterally introduced stream.

9. Process according to one of claims 1 to 8, characterised in that the flow cross-section widens steadily downstream from the constriction (3).

10. Process according to one of claims 1 to 9, characterised in that the selected number i of orifices (5) for the partial streams to be introduced laterally is between $2 \leq i \leq m$, wherein m is derived from the condition

$$\frac{\pi \cdot D}{m \cdot d} = > 1.1$$

wherein D is the diameter of the constriction (3) and d the diameter of the orifices (5).

11. Process according to one of claims 1 to 10, characterised in that the mixture of component A with B and/or C is preferably passed through the constriction, optionally in the presence of components E and/or F, and the volumetric flow of component D is passed through the lateral orifices, optionally in the presence of components E and/or F.

12. Process according to one of claims 1 to 11, characterised in that the mixture of component A with B and/or C is preferably delivered to the nozzle at a minimum of 100°C.

**Revendications**

1. Procédé pour la préparation en continu d'élastomères de polyuréthanne et de polyuréthanne-urée, par mise en réaction

    A) de polyisocyanates avec

    B) des composés polyhydroxylés d'un poids moléculaire de 400 à 10.000 et/ou

    C) des composés polyaminés d'un poids moléculaire de 400 à 10.000,

    D) des agents d'allongement de chaînes présentant au moins deux atomes d'hydrogène actif de Zerewitinow, possédant un poids moléculaire inférieur à 400, ainsi qu'éventuellement

    E) des monoisocyanates et/ou des composés monofonctionnels vis-à-vis d'isocyanates, éventuellement en présence

    F) d'activateurs, de stabilisateurs, de lubrifiants et d'autres additifs connus en soi,

caractérisé en ce que, pour la préparation, on introduit de manière conjointe dans une buse (1), les substances de départ ou les mélanges de départ, notamment un composant à teneur isocyanate et un composant à teneur hydroxyle et/ou amino, en faisant passer un des deux composants par un rétrécissement dans cette buse (1) et en acheminant par le côté, l'autre composant dans ce rétrécissement (3) au courant du premier composant, en plusieurs courants partiels, à travers un nombre correspondant d'alésages (5) répartis sur la périphérie du rétrécissement (3) et on fait réagir le produit obtenu dans un tronçon de séjour (9).

2. Procédé selon la revendication 1, caractérisé en ce qu'on guide le courant volumique majeur à travers le rétrécissement (3) .

3. Procédé selon la revendication 1 ou 2, caractérisé en ce qu'on maintient dans le rétrécissement, une vitesse d'écoulement de 1 à 10 m/sec.

4. Procédé selon l'une quelconque des revendications 1 à 3, caractérisé en ce que le rétrécissement (3) présente, sur toute sa longueur L, un diamètre constant D.

5. Procédé selon la revendication 4, caractérisé en ce que la longueur L correspond au moins au double du diamètre D du rétrécissement (3).

6. Procédé selon l'une quelconque des revendications 1 à 5, caractérisé en ce que, pour la longueur $L_1$ du rétrécissement (3) du courant acheminé en direction axiale jusqu'au guidage conjoint avec les courants partiels du second composant, on choisit une dimension de diamètre correspondant à 0,5-2 fois le diamètre D du rétrécissement (3).

7. Procédé selon l'une quelconque des revendications 1 à 6, caractérisé en ce que le courant de produit résultant des deux courants est soumis à un rétrécissement (3) qui reste constant, dont la longueur $L_2$ correspond au moins au tronçon dans lequel la réaction de l'isocyanate libre est terminée dans une large mesure.

8. Procédé selon l'une quelconque des revendications 1 à 7, caractérisé en ce qu'on maintient le rapport du débit du courant $\varepsilon_A$ acheminé en direction axiale à celui du courant $\varepsilon_S$ acheminé en direction latérale à

$$\frac{\varepsilon_A}{\varepsilon_S} = \frac{\delta_A \cdot \overset{\circ}{v}_A \cdot v_A^2}{\delta_S \cdot \overset{\circ}{v}_S \cdot v_S^2} = 0,01 \text{ à } 1,0, \text{ où}$$

où

$\delta$ représente la masse volumique,

$\overset{\circ}{v}$ représente le courant volumique

$v$ représente la vitesse d'écoulement,
et, en fait, respectivement avec l'indice A du courant acheminé en direction axiale et respectivement avec l'indice S du courant acheminé en direction latérale.

9. Procédé selon l'une quelconque des revendications 1 à 8, caractérisé en ce que, derrière le rétrécissement (3), la section d'écoulement s'élargit en continu.

10. Procédé selon l'une quelconque des revendications 1 à 9, caractérisé en ce qu'on choisit le nombre i des alésages (5) pour les courants partiels à acheminer en direction latérale entre $2 \leq i \leq m$ où m s'obtient à partir de l'équation

$$\frac{\pi \cdot D}{m \cdot d} = > 1,1$$

où D représente le diamètre du rétrécissement (3) et d représente le diamètre des alésages (5).

11. Procédé selon l'une quelconque des revendications 1 à 10, caractérisé en ce que de préférence on guide à travers la rétrécissement, le mélange des composants A avec B et/ou C éventuellement en présence des composants E et/ou F, et on guide le courant volumique du composant D éventuellement en présence des composants E et/ou F à travers les alésages latéraux.

12. Procédé selon l'une quelconque des revendications 1 à 11, caractérisé en ce que de préférence on achemine à la buse le mélange des composants A avec B et/ou C à une température minimale de 100°C.

FIG. 1

FIG. 2